# EUROPÄISCHE PATENTSCHRIFT

(11) **EP 2 240 537 B1**
(45) Veröffentlichungstag und Bekanntmachung des Hinweises auf die Patenterteilung: **25.04.2012**
(21) Anmeldenummer: 09708400.8
(22) Anmeldetag: 05.02.2009
(51) Int. Cl.: C08J 3/20, C08J 7/04

(54) **BESCHICHTETE POLYOXYMETHYLENE**
COATED POLYOXYMETHYLENES
POLYOXYMÉTHYLÈNES ENROBÉS

(30) Priorität: 06.02.2008 EP 08101309
(43) Veröffentlichungstag der Anmeldung: 20.10.2010
(73) Patentinhaber: BASF SE, 67056 Ludwigshafen (DE)
(72) Erfinder: SHARAVANAN, Karthikeyan, 68199 Mannheim (DE); ASSMANN, Jens, 68165 Mannheim (DE); HERRERA TABOADA, Lidcay, E-08008 Barcelona (ES); ANDERLIK, Rainer, 69126 Heidelberg (DE); WELLER, Lothar, 67354 Römerberg (DE); PRINZ, Michael, 67147 Forst (DE); DEMETER, Jürgen, 67069 Ludwigshafen (DE)
(86) Internationale Anmeldenummer: PCT/EP2009/051318
(87) Internationale Veröffentlichungsnummer: WO 2009/098256

(56) Entgegenhaltungen:
- EP-A- 1 125 954
- EP-A- 1 522 554
- EP-A- 1 595 918
- EP-A- 1 674 526
- EP-A- 1 683 838
- EP-A- 1 686 156
- EP-A- 1 688 461
- GB-A- 1 325 185
- DATABASE WPI Week 200449 Thomson Scientific, London, GB; AN 2004-510097 XP002523695 & JP 2004 169027 A (ASAHI KASEI KK) 17. Juni 2004 (2004-06-17)

## Beschreibung

Die Erfindung betrifft beschichtete Polyoxymethylen-Formkörper, enthaltend mindestens ein Polyoxymethylenhomo- oder -copolymerisat A) sowie gegebenenfalls weitere Zusatzstoffe B), welches mit mindestens einem Bindemittel C) und einem Formaldehydfänger D) an der Oberfläche beschichtet ist, dadurch gekennzeichnet, dass man als Bindemittel C) mindestens ein Pfropfpolymer C₃ aus Polyalkylenoxid C₁ und Polyvinylester C₂ und als Formaldehydfänger D) mindestens eine Imidazolidin-2-on-Verbindung einsetzt.

Weiterhin betrifft die Erfindung ein Verfahren zur Herstellung derartiger beschichteter Polyoxymethylenformkörper jeglicher Art, sowie die hierbei erhältlichen Polyoxymethylenformmassen.

Polyoxymethylene, welche eine geringe Formaldehydemission aufweisen, sind für viele Anwendungen relevant, insbesondere für Automobilanwendungen.

Formaldehydfänger können beispielsweise Zeolithe sein, welche physikalisch FA (Formaldehyd) absorbieren.

Andere Formaldehydfänger sind N-haltige Verbindungen, welche chemisch mit FA reagieren.

Amine, Amino-substituierte Triazine und Hydrazidkomponenten sind beispielsweise aus den EP-A 16 37 557, EPA, 15 22 554, JP-A 11/140 272, JP-A 06/80619, JP-A 04/345 648 und JP 2002/35098 bekannt. In allen genannten Schriften erfolgt die Einarbeitung der FA-Fänger über die sog. (Sekundär)konfektionierung. Da hierbei FA-Additive bei der üblichen Entgasung schon abreagieren, sind höhere Gehalte an FA-Fängern in den Formmassen nötig.

Die Anwesenheit N-haltiger FA-Fänger führt zusätzlich meist zu Gelbfärbungen des Polymeren. Die bei der Entgasung entstehenden Monomeren können nicht ohne Reinigung in den Polymerisationsprozess zurückgeführt werden, da anwesende N-Verbindungen die Polymerisation stören würden.

Aus der EP-A 1 125 954 sind Beschichtungdsmassen auf Basis von Propfpolymeren aus einem Polyvinylester und einem Polyalkylenoxid bekannt.

Die EP-A 1 686 156 offenbart Formmassen aus Polyoxymethylenpartikeln, die mit einem Formaldehydfänger wie einer Ethylenharnstoffverbindung und einem Polyalkylenoxid oder einem Polyvinylester beschichtet werden.

Aufgabe der vorliegenden Erfindung war es daher, Polyoxymethylene mit verringerter FA-Emission zur Verfügung zu stellen, die die vorstehend genannten Nachteile nicht aufweisen.

Demgemäß wurden die eingangs definierten beschichteten POM-Formkörper gefunden. Weiterhin wurde ein Verfahren zur Herstellung der beschichteten Polyoxymethylene gefunden.

Bevorzugte Ausführungsformen sind den Unteransprüchen zu entnehmen.

Als Komponente A) enthalten die erfindungsgemäßen Formkörper 10 bis 100 Gew.-%, vorzugsweise 30 bis 98 Gew.-% und insbesondere 40 bis 90 Gew.-% eines Polyoxymethylenhomo- oder -copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten -CH2O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten -CH2O-noch bis zu 50, vorzugsweise 0,1 bis 20, insbesondere 0,3 bis 10 mol-% und ganz besonders bevorzugt 0,2 bis 2,5 mol-% an wiederkehrenden Einheiten aufweisen, 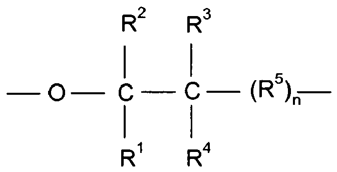 wobei R¹ bis R⁴ unabhängig voneinander ein Wasserstoffatom, eine C₁ - bis C₄ - Alkylgruppe oder eine halogensubstituierte Alkylgruppe mit 1 bis 4 C-Atomen und R⁵ eine -CH₂-, CH₂O-, eine C₁ - bis C₄ -Alkyl- oder C₁ - bis C₄ -Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 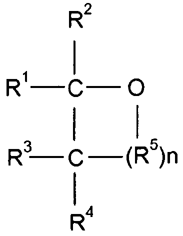 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 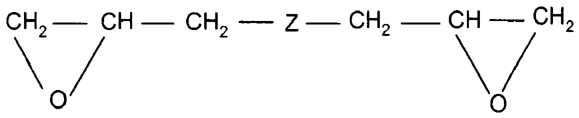 und/oder 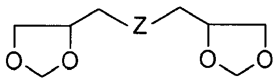 wobei Z eine chemische Bindung, -O-, -ORO- (R= C₁-bis C₈-Alkylen oder C₃-bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so dass sich hier nähere Angaben erübrigen.

Die bevorzugten Polyoxymethylencopolymere haben Schmelzpunkte von mindestens 160 bis 170°C (DSC, ISO 3146) und Molekulargewichte (Gewichtsmittelwert) Mw im Bereich von 5000 bis 300000, vorzugsweise von 7000 bis 250000 (GPC, Standard PMMA).

Endgruppenstabilisierte Polyoxymethylenpolymerisate, die an den Kettenenden C-C-Bindungen aufweisen, werden besonders bevorzugt.

Die erfindungsgemäßen Polyoxymethylenformkörper können bis zu 70, vorzugsweise bis 50 Gew.-% (bezogen auf 100 Gew.-% A) und B)) sonstiger Additive enthalten. Geeignete Additive sind beispielsweise
- Talkum,
- Polyamide, insbesondere Mischpolyamide,
- Erdalkalisilikate und Erdalkaliglycerophosphate,
- Ester oder Amide gesättigter aliphatischer Carbonsäuren,
- Ether, die sich von Alkoholen und Ethylenoxid ableiten,
- unpolare Polypropylenwachse,
- Nukleierungsmittel,
- Füllstoffe wie Glasfasern, Nanotubes, Wollastonit, Kreide, vorzugsweise mit Borsäure oder deren Derivaten als Synergisten,
- schlagzäh modifizierende Polymere, insbesondere solche auf Basis von Ethylen-Propylen (EPM)- oder Ethylen-Propylen-Dien (EPDM)-Kautschuken oder thermoplastischen Polyurethanen,
- Flammschutzmittel,
- Weichmacher,
- Haftvermittler,
- Farbstoffe und Pigmente,
- weitere Formaldehyd-Fänger, verschieden von D), Zeolithe oder Polyethylenimine, oder Melamin-Formaldehyd-Kondensate,
- Antioxidantien, insbesondere solche mit phenolischer Struktur, Benzophenonderivate, Benzotriazolderivate, Acrylate, Benzoate, Oxanilide und sterisch gehinderte Amine (HALS = hindered amine light stabilizers).

Diese Zusatzstoffe sind bekannt und beispielsweise in Gächter/Müller, Plastics Additives Handbook, Hanser Verlag München, 4. Auflage1993, Reprint 1996 beschrieben.

Die Menge der Additive hängt vom verwendeten Additiv und der gewünschten Wirkung ab. Dem Fachmann sind die üblichen Mengen bekannt. Die Additive werden, falls mitverwendet, in üblicher Weise zugefügt, beispielsweise einzeln oder gemeinsam, als solche, als Lösung bzw. Suspension oder bevorzugt als Masterbatch.

Man kann die fertige POM-Formmasse in einem einzigen Schritt herstellen, indem z.B. man das POM und die Additive in einem Extruder, Kneter, Mischer oder einer anderen geeigneten Mischvorrichtung unter Aufschmelzen des POM vermischt, die Mischung austrägt und anschließend üblicherweise granuliert. Jedoch hat es sich als vorteilhaft erwiesen, einige oder alle der Komponenten zunächst in einem Trockenmischer oder einem anderen Mischapparat "kalt" vorzumischen und die erhaltene Mischung in einem zweiten Schritt unter Aufschmelzen des POM - ggf. unter Zugabe weiterer Komponenten - in einem Extruder oder sonstigen Mischvorrichtung zu homogenisieren. Insbesondere kann es vorteilhaft sein, zumindest das POM und das Antioxidants (falls mitverwendet) vorzumischen.

Der Extruder bzw. die Mischvorrichtung kann mit Entgasungsvorrichtungen versehen sein, beispielsweise um Restmonomere oder sonstige flüchtige Bestandteile auf einfache Weise zu entfernen. Die homogenisierte Mischung wird wie üblich ausgetragen und vorzugsweise granuliert.

Die Additivzugabe kann besonders schonend ausgestaltet werden, indem man die Verweilzeit zwischen dem Austrag aus der Entgasungsvorrichtung und dem Eintrag in Mischvorrichtung, in der die Additive zugefügt werden, minimiert. Dazu kann man beispielsweise den Entgasungstopf unmittelbar auf den Einzug des Extruders montieren, der zur Abmischung mit den Additiven verwendet wird.

Erfindungsgemäße Polyoxymethylenformkörper enthalten - wie oben beschrieben - die Komponenten A) und gegebenenfalls B), welche mit mindestens einem Bindemittel C) und einem Formaldehydfänger D) beschichtet sind, wobei man als Bindemittel C) mindestens ein Pfropfpolymer C₃) aus Polyalkylenoxid C₁) und Vinylester C₂) einsetzt.

Das erfindungsgemäß einzusetzende Bindemittel C) nämlich Pfropfpolymere C₃) aus C₁) und C₂) sind beispielsweise in der DE-A 10 77 430 und EP-A 219 048 beschrieben, auf welche ausdrücklich hier verwiesen sei.

Polyalkylenoxide C₁) sind z.B. Polyethylenglykole, welche nichtionogene Verbindungen der allgemeinen Formel 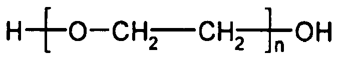 sind.

Polyethylenglykole werden technisch hergestellt durch anionische Ringöffnungspolymerisation von Ethylenoxid (Oxiran) meist in Gegenwart geringer Mengen Wasser (oder auch Natriummethylat oder Alkalihydroxid). Sie haben je nach Reaktionsführung Molmassen im Bereich von ca. 200 bis 5.000.000 g/mol, entsprechend Polymerisationsgraden Pₙ von ca. 5 bis > 100.000. Im weiteren Sinne werden auch Produkte mit einem Pₙ = 2 bis 4 (Diethylenglycol, Triethylenglycol und Tetraethylenglycol) zu den Polyethylenglykolen gerechnet, sie sind mol.-einheitlich herstellbar, während die Polyethylenglykole mit höheren Molmassen polydispers sind. In Abhängigkeit von n entstehen salbenförmige bzw. wachsartige Substanzen.

Flüssige Produkte mit Molmassen ca. < 25.000 g/mol werden als eigentliche Polyethylenglykole, Kurzzeichen PEG, die höhermolekularen festen (Schmp. ca. 65°C) als Polyethylenoxide, Kurzzeichen PEOX, bezeichnet. Hochmolekulare Polyethylenoxide besitzen eine äußerste niedrige Konzentration an reaktiven Hydroxy-Endgruppen und zeigen daher nur noch schwache Glycol-Eigenschaften. Als Polyethylenglykole werden auch verzweigte Polyaddukte von Ethylenglycol an mehrwertige Alkohole bezeichnet.

Polyethylenglykole sind flüssige bzw. wachsartige bis feste Produkte, die sich in Wasser bis ca. 100°C und in vielen organischen Lösungsmitteln gut lösen. Wässrige Lösungen haben auffallende rheologische Eigenschaften: verschiedene Lösungen zeigen z.T. starke Viskoelastizität.

Die mittlere molare Masse (berechnet aus der OH-Zahl nach DIN 53240) beträgt vorzugsweise von 100 bis 15000, vorzugsweise von 150 bis 10000 g/mol, der Schmelzpunkt in der Regel von -50 bis 100°C, vorzugsweise von -40 bis 80°C.

Die kinematische Viskosität gemäß DIN 51562 bei 20°C beträgt von 10 bis 150, bevorzugt von 80 bis 120 mm²/s.

Derartige Produkte sind unter der Marke Pluriol® E der BASF Aktiengesellschaft erhältlich.

Eine weitere Gruppe bevorzugter Polyalkylenoxide C₁) sind Polypropylenglykole der allgemeinen Formel 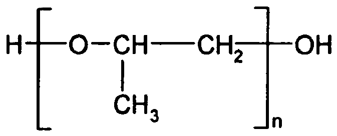 mit Mₜ 250 bis 4000, deren niedermolekulare Vertreter mit Wasser mischbar sind, während die höhermolekularen Polypropylenglykole dagegen kaum wasserlöslich sind. Sehr hochmolekulare Polypropylenglykole werden als Polypropylenoxide bezeichnet. Die Polypropylenglykole entstehen durch Ringöffnungspolymerisation von Methyloxiran. Sie zählen als Glykolether im weiteren Sinne zu den Polyethern. Die einfachsten Vertreter der Polypropylenglykole sind Di-, Tri- und Tetrapropylenglykol.

Bevorzugte Polypropylenglykole weisen eine mittlere molare Masse (berechnet aus der OH-Zahl) von 200 bis 10000, vorzugsweise 400 bis 5000 g/mol auf, die kinematische Viskosität beträgt bevorzugt bei 20°C gemäß DIN 51562 50 bis 2000, bevorzugt 80 bis 1200 mm²/s.

Derartige Produkte sind unter der Marke Pluriol® P der BASF Aktiengesellschaft im Handel erhältlich.

Eine weitere bevorzugte Gruppe von Polyalkylenoxiden C₁) sind Alkylpolyalkylenglykole, wie

| | |
|---|---|
| Methylpolyethylenglykole | |
| CH₃O(CH₂CH₂O)ₙH | (Pluriol® A ... E Marken) |
| Butylpolypropylenglykole | |
| R-O[CH₂(CH₃)CHO]ₙH | (Pluriol® A ... P Marken) |
| Butylpolyalkylenglykol-Mischpolymerisate | |
| R-O[(CH₂CH₂O)ₙ(CH₂(CH₃)CHO)]ₘH | (Pluriol® A ... PE Marken) |
| Allyl- und Butindiolpolyalkylenglykole, | |
| sowie Tetramethyldecindiol | (Pluriol® A ... R Marken) |
| Allylalkoholethoxylat | |
| CH₂=CHCH₂O(CH₂CH₂O)ₙH | (Pluriol® A 010 R) |
| Allylalkoholalkoxylat | |
| CH₂=CHCH₂O[(CH₂CH₂O)ₙ(CH₂(CH₃)CHO)]ₘH | (Pluriol® A 23 R) |
| 2,4,7,9-Tetramethyl-5-decin-4,7-diol | (Pluriol® A 104 R) |
| Allylalkoholalkoxyl-Methyl endgruppenverschlossen | |
| CH₂=CHCH₂O[(CH₂CH₂O)ₙ(CH₂(CH₃)CHO)]ₘCH₃ | (Pluriol® A 111 R) |
| Butin-1,4-diol-polyethoxylat | |
| H(OCH₂CH₂)ₙ-OCH₂-C≡C-CH₂O-(CH₂CH₂O)ₙH | (Pluriol® A 308 R) |
| Mehrfunktionelle Polyalkylenglykole auf Basis | |
| Trimethylolpropan oder Glycerin | (Pluriol® A. TE Marken) |

Die Hydroxylzahl gemäß DIN 53240 beträgt bevorzugt von kleiner 3 bis 1000, vorzugsweise kleiner 3 bis 800 mg KOH/g, die mittleren molaren Massen von 200 bis 7000, vorzugsweise von 350 bis 5000 g/mol.

Selbstverständlich können auch Mischungen von C₁) eingesetzt werden.

Als Polyvinylester C₂) sind Polyvinylacetat und/oder Polyvinylpropionat bevorzugt.

Insbesondere bevorzugt sind Polyvinylacetate, welche durch radikalische Polymerisation von Essigsäurevinylester zugänglich sind. Die Verknüpfung der Monomeren beim Aufbau der Polymerkette erfolgt in hohen Anteilen (bis zu 98 %) als Kopf/Schwanz-Polymerisation und nur in geringem Maß als Kopf/Kopf-Polymerisation, die Makromoleküle der Polyvinylacetate enthalten als hauptsächlich Gruppierungen des Typs I (Kopf/Schwanz) und nur wenige des Typs II (Kopf/Kopf) als charakteristische Grundeinheiten:

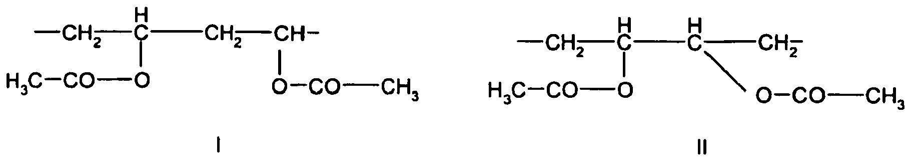

Die Herstellung der Polyvinylacetate kann nach Verfahren der Substanz-, Lösungs-, Suspensions- (Perl-) oder - technisch bevorzugt - als Emulsionspolymerisation erfolgen. Polyvinylacetate haben Molmassen von 10.000 bis 1.500.000 g/mol. Sie sind amorphe, geruch- und geschmacklose Produkte mit hoher Licht- und WitterungsBeständigkeit, unlöslich in Wasser und löslich in vielen organischen Lösungsmitteln (Ester, Ether, Ketone, halogenierte Kohlenwasserstoffe u.a.). Die Polyvinylacetate werden als Pulver, Körner, Granulate oder als wässrige Dispersionen in den Handel gebracht.

Bevorzugte Handelsprodukte sind unter der Marke Vinnapas® der Firma Wacker Polymers Systems GmbH & Co. KG erhältlich. Die Viskosität derartiger Produkte beträgt bevorzugt von 1,0 bis 60, vorzugsweise von 1,2 bis 55 mPa·s (10 %ig in Ethylacetat bei 20°C gemäß DIN 53015).

Selbstverständlich können auch Mischungen von C₂) eingesetzt werden.

Insbesondere zeichnen sich diese durch eine enge Molmassenverteilung und damit eine Polydispersität M_{w}/Mₙ von in der Regel ≤ 4, insbesondere ≤ 3, bevorzugt ≤ 2,5 aus. Ganz besonders bevorzugt liegt ihre Polydispersität M_{w}/Mₙ im Bereich von 1,0 bis 2,3. Die Polydispersität der Pfropfpolymere kann z.B. durch Gelpermeationschromatographie unter Verwendung von eng verteilten Polymethylmethacrylaten als Standard bestimmt werden.

Das mittlere Molekulargewicht M_{w} der Pfropfpolymere beträgt 3 000 bis 100 000, bevorzugt 6 000 bis 45 000 und besonders bevorzugt 7 000 bis 30 000.

Die Pfropfpolymere weisen vorzugsweise einen Aufbau aus
(A) 20 bis 70 Gew.-% eines wasserlöslichen Polyalkylenoxids
(B) 30 bis 80 Gew.-% einer Vinylesterkomponente aus
   (B1) 70 bis 100 Gew.-% Vinylacetat und/oder Vinylpropionat und
   (B2) 0 bis 30 Gew.-% eines weiteren ethylenisch ungesättigten Monomers auf.

Besonders bevorzugt enthalten sie 25 bis 60 Gew.-% der Komponente (A) und 40 bis 75 Gew.-% der Polyvinylesterkomponente (B).

Als die Pfropfgrundlage (A) bildende wasserlösliche Polyalkylenoxide sind prinzipiell alle Polymere auf Basis von C₂-C₄-Alkylenoxiden geeignet, die mindestens 50 Gew.-%, bevorzugt mindestens 60 Gew.-%, besonders bevorzugt mindestens 75 Gew.-% Ethylenoxid in einpolymerisierter Form enthalten.

Vorzugsweise weisen die Polyalkylenoxide (A) eine geringe Polydispersität M_{w}/Mₙ auf. Vorzugsweise liegt ihre Polydispersität bei ≤ 1,5.

Bei den Polyalkylenoxiden (A) kann es sich um die entsprechenden Polyalkylenglykole in freier Form, d.h. mit OH-Endgruppen, handeln, sie können jedoch auch ein- oder beidseitig endgruppenverschlossen sein. Als Endgruppen eignen sich z.B. C₁-C₂₅-Alkyl-, Phenyl- und C₁-C₁₄-Alkylphenylgruppen.

Als Beispiele für besonders geeignete Polyalkylenoxide (A) seien im einzelnen genannt:
(A1) Polyethylenglykole, die ein- oder beidseitig insbesondere durch C₁-C₂₅-Alkylgruppen endgruppenverschlossen sein können, vorzugsweise jedoch nicht verethert sind und mittlere Molmassen Mₙ bevorzugt von 1 000 bis 20 000, besonders bevorzugt von 2 500 bis 15 000 aufweisen;
(A2) Copolymere von Ethylenoxid und Propylenoxid und/oder Butylenoxid mit einem Ethylenoxidgehalt von mindestens 50 Gew.-%, die ebenfalls ein- oder beidseitig insbesondere durch C₁-C₂₅-Alkylgruppen endgruppenverschlossen sein können, vorzugsweise jedoch nicht verethert sind und mittlere Molmassen Mₙ bevorzugt von 1 000 bis 20 000, besonders bevorzugt von 2 500 bis 15 000 aufweisen;
(A3) kettenverlängerte Produkte mit mittleren Molmassen von insbesondere 2 500 bis 20 000, die durch Umsetzung von Polyethylenglykolen (A1) mit mittleren Molmassen Mₙ von 200 bis 5 000 oder von Copolymeren (A2) mit mittleren Molmassen Mₙ von 200 bis 5 000 mit C₂-C₁₂-Dicarbonsäuren oder -Dicarbonsäureestern oder C₆-C₁₈-Diisocyanaten erhältlich sind.

Bevorzugte Komponenten (A) bilden die Polyethylenglykole (A1).

Die Vinylesterkomponente (B) kann vorteilhaft aus (B1) Vinylacetat oder Vinylpropionat oder von Mischungen von Vinylacetat und Vinylpropionat bestehen, wobei Vinylacetat als Vinylesterkomponente (B) besonders bevorzugt ist.

Das Pfropfpolymer kann jedoch auch durch Copolymerisation von Vinylacetat und/oder Vinylpropionat (B1) und einem weiteren ethylenisch ungesättigten Monomer (B2) gebildet werden. Der Anteil des Monomers (B2) an der Vinylesterkomponente (B) kann dabei bis zu 30 Gew.-% betragen, was einem Gehalt des Pfropfpolymers an (B2) von 24 Gew.-% entspricht.

Geeignete Comonomere (B2) sind z.B. monoethylenisch ungesättigte Carbonsäuren und Dicarbonsäuren und deren Derivate, wie Ester, Amide und Anhydride, und Styrol. Selbstverständlich können auch Mischungen verschiedener Comonomere eingesetzt werden.

Im einzelnen beispielhaft genannt seien: (Meth)Acrylsäure, C₁-C₁₂-Alkyl- und Hydroxy-C₂-C₁₂-alkylester von (Meth)Acrylsäure, (Meth)Acrylamid, N-C₁-C₁₂-Alkyl(meth)acrylamid, N,N-Di(C₁-C₆-alkyl)(meth)acrylamid, Maleinsäure, Maleinsäureanhydrid und Mono(C₁-C₁₂-alkyl)ester von Maleinsäure.

Als Monomere (B2) bevorzugt sind die C₁-C₈-Alkylester von (Meth)Acrylsäure und Hydroxyethylacrylat, wobei die C₁-C₄-Alkylester von (Meth)Acrylsäure besonders bevorzugt sind.

Ganz besonders bevorzugte Monomere (B2) sind Methylacrylat, Ethylacrylat und vor allem n-Butylacrylat.

Wenn die erfindungsgemäßen Pfropfpolymere die Monomere (B2) als Bestandteil der Vinylesterkomponente (B) enthalten, dann liegt der Gehalt der Pfropfpolymere an (B2) bevorzugt bei 0,5 bis 20 Gew.-%, besonders bevorzugt bei 1 bis 15 Gew.-% und ganz besonders bevorzugt bei 2 bis 10 Gew.-%.

Für Verfahren zur Herstellung und weiterer Einzelheiten derartiger Pfropfpolymere sei ausdrücklich auf die DE-A 10 77 430 und EP-A 219 048 verwiesen.

Zur Beschichtung der POM-Formkörper wird das Bindemittel C) in Kombination mit einem FA-Fänger D) eingesetzt, wobei als FA-Fänger mindestens eine Imidazolidin-2-on-Verbindung eingesetzt wird.

Bevorzugt werden als Komponente D Imidazolidin-2-on-Verbindungen eingesetzt, welche folgende allgemeine Formel aufweisen: 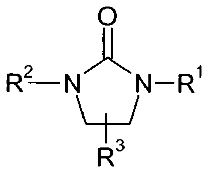 wobei
- R¹, R²: unabhängig voneinander Wasserstoff, einen Alkylrest mit 1 bis 20 C-Atomen, OR⁴, Nitrorest, einen Hydroxyalkylrest mit 1 bis 10 C-Atomen,
- R³: Wasserstoff, einen Alkylrest mit 1 bis 20 C-Atomen, welcher gegebenenfalls substituiert sein kann, Ketogruppe, Aldehydgruppe, COOR⁴-Gruppe, Amin- oder Amidgruppe, oder einen aromatischen Ring mit 5 bis 8 C-Atomen
- R⁴: Wasserstoff oder einen Alkylrest mit 1 bis 4 C-Atomen
bedeuten.

Bevorzugte Reste R¹, R² sind unabhängig voneinander Alkylreste mit 1 bis 8 C-Atomen, wobei Methyl-, Ethyl-, Propyl-, Butyl-, iso-Propyl-, iso-Butyl-, t-Butylreste und insbesondere Wasserstoff besonders bevorzugt sind.

Bevorzugte Etherreste OR⁴ sind Ethoxy- und Methoxyreste.

Geeignete Hydroxyalkylreste sind insbesondere solche mit 1 bis 4 C-Atomen, wobei -C₂H₅OH und -CH₃-OH-Reste besonders bevorzugt sind. Bevorzugt stellen beide Reste R¹ und R² eine Nitrogruppe dar.

Bevorzugte Reste R³ sind ein Alkylrest mit bis zu 4 C-Atomen, und ein aromatischer Ring mit 5 bis 6 C-Atomen, wobei R³ = Wasserstoff besonders bevorzugt ist.

Insbesondere bevorzugt sind folgenden Verbindungen:

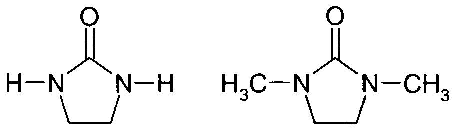

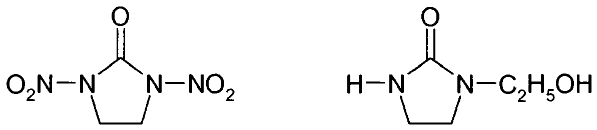

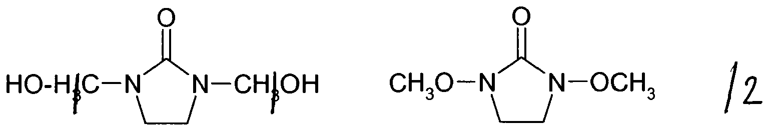

Imidazolidin-2-on wird üblicherweise aus Ethylendiamin und Kohlendioxid hergestellt. Die Derivate können nach üblichen Methoden hergestellt werden (s. beispielsweise Römpp's Online Lexikon, 2008, Stichwort: "Imidazolidin-2-on" und dort angegebene Literatur).

Erfindungsgemäß werden die beschichteten POM-Formkörper erhalten, indem man vorab aus den Komponenten C) und D) eine Lösung, Emulsion oder Dispersion herstellt und diese anschließend auf die POM-Formkörper aufbringt und gegebenenfalls trocknet und/oder konfektioniert.

Bevorzugt ist eine Lösung aus dem Bindemittel C) und dem FA-Fänger D). Als Lösungsmittel für C₁) eignet sich insbesondere Wasser, während C₂) meist wasserunlöslich ist. Geeignete Lösungsmittel für C₂) sind organische Lösungsmittel wie Ketone, Ether, Ester oder halogenierte Kohlenwasserstoffe, wobei ketonische Lösungsmittel, insbesondere Aceton bevorzugt sind.

Derartige Lösungen enthalten, bezogen auf 100 Gew.-% aller Bestandteile der Lösung von 0,1 bis 50, vorzugsweise 1 bis 40 und insbesondere 1 bis 30 Gew.-% jeweils C) und D) sowie optional 0 bis 10 Gew.-%, bevorzugt bis zu 5 Gew.-%, eines Pigmentes E).

Ein bevorzugtes Beispiel solcher Additive ist Knochenasche, die z.B. aus calzinierten oder gemahlenen Tierknochen erhältlich ist. Durch entsprechende Zerkleinerung und Nachbehandlung von roher Knochenholzkohle sind Produkte erhältlich, die in Farbintensität und Teilchengröße variieren.

Herkömmliche Knochenasche hat im allgemeinen etwa folgende Zusammensetzung:
85 bis 90 Gew.-% Calciumphosphat
7,5 bis 12 Gew.-% Kohlenstoff
1,5 Gew.-% Wasser.

Der pH-Wert liegt im allgemeinen im Bereich von 7 bis 9, insbesondere von 7,5 bis 8,5 und die Dichte im Bereich von 1,8 bis 3,0, vorzugsweise 2,1 bis 2,5 g/cm³.

Für die erfindungsgemäßen Formmassen geeignete Knochenasche ist z.B. von Hoover Colour Corporation unter der Bezeichnung "Bone Black" erhältlich.

Als Ruß sind prinzipielle Produkte geeignet, wie sie z.B. in Encyclopedia of Chemical Technology, Vol. 3, S. 34 ff (Interscience Encyclopedia, New York) beschrieben sind.

Weitere geeignete Pigmente sind Eisenoxidschwarz (Fe₃O₄), Spinellschwarz (Cu(Cr₁Fe)₂O₄) und Manganschwarz (Mischung aus Mangandioxid, Siliciumdioxid und Eisenoxid). Weiterhin sind auch Kupferphthalocyaninpigmente einsetzbar.

Als rote Pigmente eignen sich solche, welche unter der Marke Paliogenrot® der BASF Aktiengesellschaft vertrieben werden, z.B. 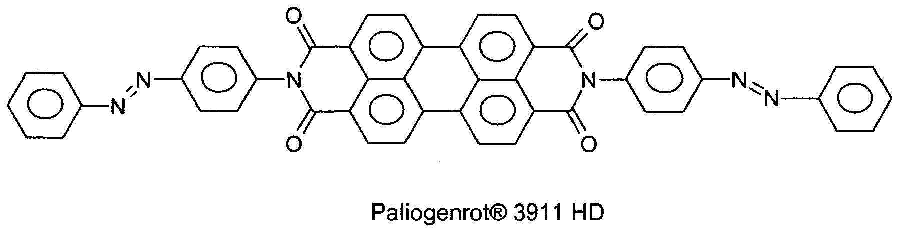 0,05 bis 5 Gew.-%, bevorzugt 0,1 bis 3 und insbesondere 0,2 bis 2 Gew.-% der gemäß oben erhaltenen Lösung (=̂ 100 Gew.-%) wird anschließend auf die POM-Formkörper (1 kg) aufgebracht.

Die Temperatur beträgt vorzugsweise Raumtemperatur bis 60°C, vorzugsweise Raumtemperatur bis 50°C.

Im allgemeinen werden die Lösungen, die Raumtemperatur haben, zerstäubt (Sprüh/Spray-Technik). Um deren Viskosität zu verringern, kann es erforderlich sein, die Lösungen bei erhöhter Temperatur zu versprühen. In der Regel liegen die Zerstäubungstemperaturen jedoch unterhalb der Siedetemperatur des jeweiligen Lösungsmittels.

Zur Zerstaubung können pneumatische Zerstäuber wie Mehrstoffdüsen, insbesondere Zweistoffdüsen verwendet werden. Als Beispiel hierfür seien zweiflutige oder dreiflutige Zweistoffdüsen genannt. Um einen Drall oder eine Strömungsumlenkung zu erzeugen, können die Zweistoffdüsen Einbauten enthalten. Diese können sowohl gas- als auch flüssigkeitsseitig angebracht sein. Es ist auch möglich, Ultraschallzerstäuber einzusetzen.

Das Verhältnis von Zerstäubergasmassen- zu Flüssigkeitsmassendurchsatz ist im allgemeinen größer 2. Als besonders vorteilhaft haben sich Zerstäubergas-/Flüssigkeitsdurchsätze im Verhältnis von 3 bis 10 erwiesen. In der Regel sind Gasdrucke von 5 bar oder mehr erforderlich. Mehr als 100 bar Gasdruck sind nur selten nötig. Im allgemeinen betragen die Gasdrucke von 10 bis 70 bar.

Nach der Zerstäubung können die Flüssigkeitströpfchen in einer Trockenkammer beispielsweise in einem Sprühturm bekannter Bauart getrocknet werden (siehe z.B. K. Maters: Spray Drying Handbook, Leonhard Hill Books, London 1972). Die Verdampfung des Lösungsmittels kann sowohl bei Normaldruck als auch im Vakuum erfolgen. Die zur Lösungsmittelverdampfung erforderliche Wäre wird dabei bevorzugt am Kopf des Turmes durch ein inertes Trocknungsgas zugeführt. Als Trocknungsgas eignet sich vor allem Stickstoff. Es können aber auch andere Gase wie Kohlendioxid oder Luft verwendet werden. Die Gastemperatur am Kopf des Trockenturms ist vorzugsweise größer als die Verdampfungstemperatur des Lösungsmittels und kann von Raumtemperatur bis 500°C betragen. Im allgemeinen beträgt sie 100°C oder mehr. Bevorzugt liegt sie im Bereich von 200°C bis 300°C.

Vorzugsweise strömt das Trocknungsgas zusammen mit den Flüssigkeitströpfchen durch den Trockenturm und wird am Ausgang des Turmes zusammen mit dem Trockengut abgesaugt. Die Gastemperatur am Ausgang des Turmes hängt von dem gewünschten Restlösungsmittelgehalt des Pulvers ab. Sie kann von Raumtemperatur bis knapp weniger als die Gastemperatur am Kopf des Trockenturms betragen. In der Regel beträgt sie 50°C oder mehr, beispielsweise 120°C bis 170°C. Im Allgemeinen sind Temperaturen größer als 200°C nicht erforderlich.

Das Pulver kann im Allgemeinen wie üblich durch Filter oder Zyklone von dem Gasstrom getrennt werden. Für die Herstellung der erfindungsgemäßen POM-Formkörper werden bevorzugt Filter zur Feststoffabtrennung verwendet.

Der Restlösungsmittelgehalt der POM-Formkörper beträgt ohne Nachtrocknung im Allgemeinen nicht mehr als 5 %, insbesondere kleiner als 2 %. Um den Gehalt an Restlösungsmittel weiter zu verringern, kann der Sprühtrocknung eine Nachtrocknung, die mit einer Nachkühlung kombiniert sein kann, nachgeschaltet sein. Die Nachtrocknung kann beispielsweise in einem Wirbelbett oder Fließbett erfolgen.

Nach der Trocknung enthalten die Formkörper, bezogen auf 100 Gew.-% aller Komponenten A, B, C und D, 0,01 bis 0,5 Gew.-%, vorzugsweise 0,02 bis 0,3 Gew.-% C und 0,01 bis 0,3 Gew.-%, vorzugsweise von 0,02 bis 0,2 Gew.-% D.

Weiterhin bevorzugt ist die Herstellung der beschichteten Formkörper, in dem man die Beschichtung aus C) und D) mittels Mischung der Komponenten mit geeigneten Apparaten aufbringt und anschließend konfektioniert. Hierbei kann die Beschichtung ebenfalls mittels der vorstehenden Lösungen, Dispersionen oder Emulsionen aufgebracht werden oder durch Mischen von C) und D).

Als Apparate eignen sich hierfür beispielsweise Flügelradmischer, Lödige Schaufelmischer, Taumler, Wirbelschicht- und Rotationsmischer.

Die hierbei durch übliche anschließende Konfektionierung und evtl. Zugabe weiterer Zusatzstoffe erhältlichen POM-Formmassen enthalten bezogen auf 100 Gew.-% aller Komponenten A, B, C und D, 0,01 bis 0,5 Gew.%, vorzugsweise 0,02 bis 0,3 Gew.-% C) und 0,01 bis 0,5 und vorzugsweise 0,02 bis 0,3 Gew.-% D).

Aus den Formmassen lassen sich Formkörper (auch Halbzeuge, Folien, Filme und Schäume) aller Art herstellen. Die Formkörper können als Chips, Pulver, Mikropulver, Perlen, Linsen, bevorzugt als Granulat eingesetzt werden. Die Formmassen zeichnen sich durch einen sehr geringen Restformaldehydgehalt bei gleichzeitig guter Mechanik und Verarbeitung sowie thermischer Stabilität aus. Insbesondere lassen sich sehr geringe Mengen der Additive als Beschichtung aufbringen, wobei die Wirksamkeit als FA-Fänger vergleichbar bzw. besser ist (bessere Verteilung und gute Adhäsion).

Daher eignen sich Formkörper aus derartigen Formmassen insbesondere für Anwendungen als Drucktasten, Griffmulden, Schiebedachrahmen, Lautsprechergitter, Sanitärarmaturteile, Videokassetten, Spielzeigteile, Fester und Türenbeschläge, Clipse, Befestigungselemente, Schnappverbindungen, Kugelschalen, Tankeinbauteile, Zahnräder, Führungselemente, Transportbänder, Förderanlagen, Sprühventile, Brüheinheiten für Espressomaschinen, Kaffeeautomaten, Gelenke, Rollen, Lager, Gleitschienen, Pumpenteile und Filtergehäuse, Antriebe, Feder- und Rastelemente, Spulen, Umlenkrollen, Getriebeteile, Pendelstützen.

### Beispiele

Es wurden folgende Komponenten eingesetzt:

### Komponente A/1

Polyoxymethylencopolymerisat aus 97,3 Gew.-% Trioxan und 2,7 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer eine Schmelzvolumenrate von 7-8 cm³/10 Min. (190°C, 2,16 kg, nach ISO 1133).

### Komponente A/2

POM-Copolymerisat mit MVR 1,8 bis 2,6 ml/10 Min. (190°C, 2,16 kg nach ISO 1133).

### Komponente A/3

POM-Copolymerisat mit MVR 5,7-8,3 ml/10 Min. (190°C, 2,16 kg nach ISO 1133).

### Komponente B/1

Loxiol® P 1206 der Firma Cognis (Glycerindistearat)

### Komponente B/2

Melamin-Formaldehyd-Kondensat (MFK) gemäß Beispiel 1 der DE-A 25 40 207.

### Komponente B/3

### (Irganox® 245 der Firma Ciba-Geigy)

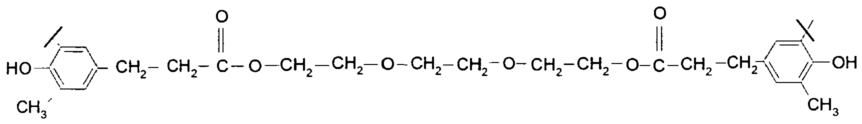

### Komponente B/4

Polyamid-Oligomeres mit einem Molekulargewicht von etwa 3000 g/mol, (als Molekulargewichtsregler) hergestellt aus Caprolactam, Hexamethylendiamin, Adipinsäure und Propionsäure in Anlehnung an die Beispiele 5-4 der US-A 3,960,984 ("PA-dicapped").

### Komponente B/5

Synthetisches Mg-Silicat (Ambosol® der Firma PQ France) mit folgenden Eigenschaften:

| | |
|---|---|
| Gehalt an MgO | ≥14,8 Gew.-% |
| Gehalt an SiO₂ | ≥59 Gew.-% |
| Verhältnis SiO₂:MgO | 2,7 mol/mol |
| Schüttdichte | 20 bis 30 g/100 ml |
| Glühverlust | < 25 Gew.-% |

### Komponente B/6

### Ruß (Printex® 90 der Firma Degussa AG)

### Komponente B/7

### Magnesiumtrisilikat

### Komponente B/8

Thermoplastisches Polyurethan mit einer Shore A-Härte von 83 (Elastollan® B 85 A der Elastogran GmbH).

Zur Herstellung der Formmassen wurde die Komponente A) mit den angegebenen Mengen der Komponenten B) in einem Trockenmischer bei einer Temperatur von 23°C gemischt. Die so erhaltene Mischung wurde in einem Doppelschneckenextruder mit Entgasungsvorrichtung (ZSK 30 bzw. ZSK 53 der Fa. Werner & Pfleiderer) eingebracht, bei 230°C homogenisiert, entgast und das homogenisierte Gemisch durch eine Düse als Strang ausgepresst und granuliert bzw. durch eine Düse in Kugel-/Linsenform unter Wasser granuliert.

**Tabelle 1:**

| Granulat 1: | | Granulat 2: |
|---|---|---|
| Komponente A/1 | | Komponente A/1 |
| 0,15 Gew.-% B/1 | | 0,15 Gew.-% B/1 |
| 0,2 Gew.-% B/2 | | 0,2 Gew.-% B/2 |
| 0,35 Gew.-% B/3 | | 0,35 Gew.-% B/3 |
| 0,04 Gew.-% B/4 | | 0,04 Gew.-% B/4 |
| 0,05 Gew.-% B/5 | | 0,05 Gew.-% B/5 |
| | | 0,25 Gew.-% B/6 |

| Granulat 3: | | Granulat 4: |
|---|---|---|
| Komponente A/2 | | Komponente A/3 |
| 0,1 Gew.-% B/1 | | 0,3 Gew.-% B/1 |
| 0,2 Gew.-% B/2 | | 0,2 Gew.-% B/2 |
| 0,35 Gew.-% B/3 | | 0,35 Gew.-% B/3 |
| 0,04 Gew.-% B/4 | | 0,04 Gew.-% B/4 |
| 0,05 Gew.-% B/5 | | 0,05 Gew.-% B/5 |
| 0,25 Gew.-% B/6 | | 0,1 Gew.-% B/7 |
| | | 12 Gew.-% B/8 |

### Komponente C

C₃₁:
Pfropfpolymer aus
30,8 Gew.-% PEG mit M = 4000 g/mol
69,2 Gew.-% PVA

### Komponente D

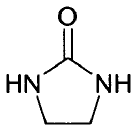

### Pigment E

Paliogenrot® 3911 HD (CAS-Nr. 3049-71-6) der BASF AG.

Herstellung der Lösungen und Beschichtungen mittels Spraytechnik

10 Gew.-% Bindemittel C₃₁ wurde in Wasser bei 60 bis 70°C gelöst.

Der FA-Fänger D) wurde in Mengen von 5 Gew.-%, 10 Gew.-% oder 20 Gew.-% zugesetzt und solange gerührt, bis eine klare Lösung entstand. Optional wurden 3 Gew.-% Pigment E) zur Lösung zugegeben.

1 Gew.-% dieser Lösung wurde auf eine mit Hochgeschwindigkeit rotierende Scheibe in einer Zentrifuge gegeben. Die Zentrifuge enthielt (unter N₂) das jeweilige POM-Granulat, welches durch die Zentrifugalkraft mit der Lösung beschichtet wurde. Die Verweilzeit betrug ca. 30 s. Die Zentrifuge lief 5 Minuten weiter und das Granulat wurde entnommen. Dieses wurde im Ofen unter Vakuum bei 80°C getrocknet. Am getrockneten Granulat wurde visuell die Verteilung und die Haftung beurteilt. Die Formaldehydemission wurde gemäß VDA 275 bestimmt.

Gemäß obiger Vorgehensweise wurden folgende Komponenten eingesetzt:

### Beispiel 1

Granulat 1, C₃₁, D, E (mit 10 % D)

### Beispiel 2

Granulat 2, C₃₁, D (mit 10 % D)

### Beispiel 3

Granulat 3, C₃₁, D (mit 10 % D)

### Beispiel 4

Granulat 4, C₃₁, D, E (mit 10 % D)

### Beispiel 5

Granulat 4, C₃₁, D (mit 10 % D)

### Beispiel 6

Granulat 4, C₃₁, D, E (mit 5 % D)

### Beispiel 7

Granulat 4, C₃₁, D (mit 5 % D)

### Beispiel 8

Granulat 4, C₃₁, D, E (mit 20 % D)

### Beispiel 9

Granulat 4, C₃₁, D (mit 20 % D)

Die Ergebnisse der Messungen sind der Tabelle 2 zu entnehmen.

**Tabelle 2**

| Beispiel | Verteilung | Haftung | FA [ppm] |
|---|---|---|---|
| 1 | ++ | ++ | 3 |
| 2 | ++ | ++ | 5 |
| 3 | ++ | ++ | 10 |
| 4 | ++ | ++ | 3 |
| 5 | ++ | ++ | 2 |
| 6 | ++ | ++ | 2 |
| 7 | ++ | ++ | 2 |
| 8 | ++ | ++ | 2 |
| 9 | ++ | ++ | 1 |

| | | | |
|---|---|---|---|
| ++ bedeutet: sehr gut + bedeutet: gut - bedeutet: schlecht | | | |

Herstellung der Beschichtungen mittels Mischung der Komponenten auf einem Flügelradmischer

Es wurde Granulat 4 gemäß Tabelle 1 mit Komponente C₃₁ und D eingesetzt.

Hierzu wurde auf Granulat 4 mit Komponente D und entweder mit 0,1 % Weißöl oder für die erfindungsgemäßen Versuche mit C₃₁ im Flügelradmischer 5 bis 10 min bei Raumtemperatur gemischt. Dieses beschichtete Granulat wurde cold feed in den Extruder dosiert und bei 190 bis 220°C kompoundiert.

### Beispiel 1

Granulat 4, C₃₁ mit 0,1 % D

### Vergleichsbeispiel 1

Granulat 4

### Vergleichsbeispiel 2

Granulat 4 mit 0,1 % D

**Tabelle 3**

| Beispiel | VDA 275 (200°C) [ppm] | VDA 275 (220°C) [ppm] |
|---|---|---|
| 1 | 2 | 11 |
| 1V | 5 | 21 |
| 2V | 2 | 16 |

## Patentansprüche

1. Beschichtete Polyoxymethylen-Formkörper, enthaltend mindestens ein Polyoxymethylenhomo- oder -copolymerisat A) sowie gegebenenfalls weitere Zusatzstoffe B), welches mit mindestens einem Bindemittel C) und einem Formaldehydfänger D) an der Oberfläche beschichtet ist, **dadurch gekennzeichnet, dass** man als Bindemittel C) mindestens ein Pfropfpolymer C₃ aus Polyalkylenoxid C₁ und Polyvinylester C₂ und als Formaldehydfänger D) mindestens eine Imidazolidin-2-on-Verbindung einsetzt.

2. POM-Formkörper nach Anspruch 1, **dadurch gekennzeichnet, dass** die Formkörper aus Chips, Granulat, Pulver, Mikropulver, Perlen, Linsen oder deren Mischungen bestehen.

3. POM-Formkörper nach den Ansprüchen 1 oder 2, **dadurch gekennzeichnet, dass** als Formaldehydfänger D) Imidazolin-2-on-Verbindungen der allgemeinen Formel 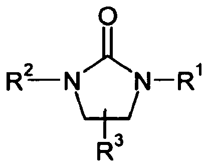 wobei
R¹, R² unabhängig voneinander Wasserstoff, einen Alkylrest mit 1 bis 20 C-Atomen, OR⁴, Nitrorest, einen Hydroxyalkylrest mit 1 bis 10 C-Atomen,
R³ Wasserstoff, einen Alkylrest mit 1 bis 20 C-Atomen, welcher gegebenenfalls substituiert sein kann, Ketogruppe, Aldehydgruppe, COOR⁴-Gruppe, Amin- oder Amidgruppe, oder einen aromatischen Ring mit 5 bis 8 C-Atomen
R⁴ Wasserstoff oder einen Alkylrest mit 1 bis 4 C-Atomen
bedeuten.

4. POM-Formkörper nach den Ansprüchen 1 bis 3, **dadurch gekennzeichnet, dass** man als Formaldehydfänger D Verbindungen folgender Struktur oder deren Mischungen einsetzt:

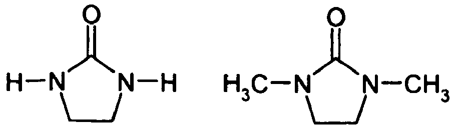

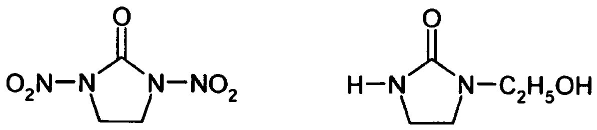

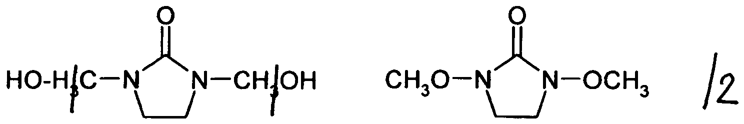

5. POM-Formkörper nach den Ansprüchen 1 bis 4, **dadurch gekennzeichnet, dass** als Bindemittel C₃ ein Pfropfpolymer aus C₁ und C₂ eingesetzt wird, welches einen Aufbau aus
A) 20 bis 70 Gew.-% eines wasserlöslichen Polyethylenoxides und
B) 30 bis 80 Gew.-% einer Vinylesterkomponente aus
B1) 70 bis 100 Gew.-% Vinylacetat und/oder Vinylpropionat und
B2) 0 bis 30 Gew.-% eines weiteren ethylenisch ungesättigten Monomers
aufweist.

6. Verfahren zur Herstellung von beschichteten POM-Formkörpern gemäß den Ansprüchen 1 bis 5, **dadurch gekennzeichnet, dass** man vorab aus den Komponenten C) und D) eine Lösung, Emulsion oder Dispersion herstellt und diese anschließend auf die POM-Formkörper aufbringt und gegebenenfalls trocknet und/oder konfektioniert.

7. Verfahren gemäß Anspruch 6, **dadurch gekennzeichnet, dass** man eine wässrige oder acetonische Lösung aus C) und D) herstellt.

8. Verfahren nach den Ansprüchen 6 oder 7, **dadurch gekennzeichnet, dass** man zusätzlich bis zu 10 Gew.-% eines Pigmentes E) zur Lösung aus C) und D) hinzugibt.

9. Verfahren nach den Ansprüchen 6 bis 8, **dadurch gekennzeichnet, dass** man die Beschichtung aus C) und D) mittels Sprüh(Spray)technik aufbringt.

10. Verfahren nach den Ansprüchen 6 bis 9, **dadurch gekennzeichnet, dass** man die Beschichtung aus C) und D) mittels Mischung der Komponenten mit geeigneten Apparaten aufbringt und anschließend konfektioniert.

11. Verfahren nach den Ansprüchen 6 bis 10, **dadurch gekennzeichnet, dass** man die Beschichtung bei Raumtemperatur bis 60°C aufbringt.

12. Polyoxymethylenformmassen, erhältlich gemäß den Verfahrensbedingungen der Ansprüche 6 bis 11.

## Claims

1. A coated polyoxymethylene molding, comprising at least one polyoxymethylene homo- or copolymer A), and also, optionally, further additives B), which has been coated on the surface with at least one binder C) and one formaldehyde scavenger D), wherein the binder C) used comprises at least one graft polymer C₃ composed of polyalkylene oxide C₁ and polyvinyl ester C₂, and the formaldehyde scavenger D) used comprises at least one imidazolidin-2-one compound.

2. The POM molding according to claim 1, which is composed of chips, pellets, powder, micropowder, beads, lenticular granules or a mixture of these.

3. The POM molding according to claim 1 or 2, wherein as formaldehyde scavenger D) imidazolidin-2-one compounds of the general formula 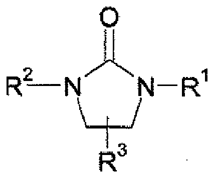 where
R¹ and R², independently of one another, are hydrogen, an alkyl radical having from 1 to 20 carbon atoms, OR⁴, nitro radical, a hydroxyalkyl radical having from 1 to 10 carbon atoms,
R³ is hydrogen, an alkyl radical having from 1 to 20 carbon atoms which can optionally have substitution, keto group, aldehyde group, COOR⁴ group, amine group or amide group, or an aromatic ring having from 5 to 8 carbon atoms,
R⁴ is hydrogen or an alkyl radical having from 1 to 4 carbon atoms
are used.

4. The POM molding according to claims 1 to 3, wherein the formaldehyde scavenger D used comprises compounds of the following structure or a mixture of these:

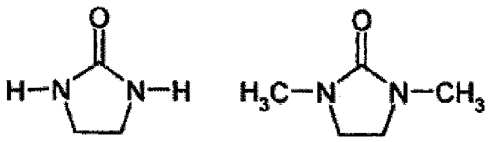

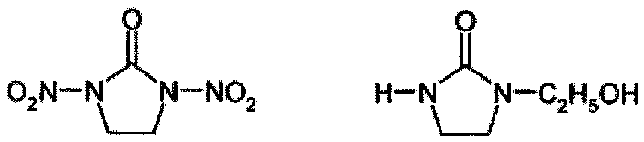

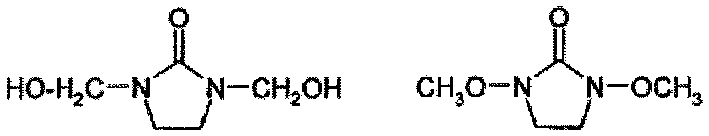

5. The POM molding according to claims 1 to 4, wherein the binder C₃ used comprises a graft polymer which is composed of C₁ and C₂, and whose structure is composed of
A) from 20 to 70% by weight of a water-soluble polyethylene oxide
and
B) from 30 to 80% by weight of a vinyl ester component composed of
B1) from 70 to 100% by weight of vinyl acetate and/or vinyl propionate
and
B2) from 0 to 30% by weight of a further ethylenically unsaturated monomer.

6. A process for the production of coated POM moldings according to claims 1 to 5, which comprises preparing in advance a solution, emulsion or dispersion from components C) and D), and then applying this to the POM moldings, and, optionally, drying and/or further processing the material.

7. The process according to claim 6, wherein an aqueous or acetonic solution is prepared from C) and D).

8. The process according to claim 6 or 7, wherein up to 10% by weight of a pigment E) is also added to the solution composed of C) and D).

9. The process according to claims 6 to 8, wherein the coating composed of C) and D) is applied by means of spray technology.

10. The process according to claims 7 to 10, wherein the coating composed of C) and D) is applied by using suitable apparatus to mix the components, where this is followed by further processing.

11. The process according to claims 7 to 11, wherein the coating is applied at from room temperature to 60°C.

12. A polyoxymethylene molding composition obtainable under the process conditions of claims 7 to 12.

## Revendications

1. Corps moulé revêtu en polyoxyméthylène, contenant au moins un homopolymère ou copolymère de polyoxyméthylène A) ainsi que le cas échéant d'autres additifs B), qui est revêtu par au moins un liant C) et un piège de formaldéhyde D) à la surface, **caractérisé en ce qu'**on utilise comme liant C) au moins un polymère greffé C₃ en poly(oxyde d'alkylène) C₁ et en poly (ester de vinyle) C₂ et comme piège de formaldéhyde D) au moins un composé de type imidazolidin-2-one.

2. Corps moulés en POM selon la revendication 1, **caractérisés en ce que** les corps moulés sont constitués par des puces, un granulat, une poudre, une micropoudre, des perles, des lentilles ou leurs mélanges.

3. Corps moulés en POM selon les revendications 1 ou 2, **caractérisés en ce qu'**on utilise comme piège de formaldéhyde D) des composés de type imidazolin-2-one de formule générale 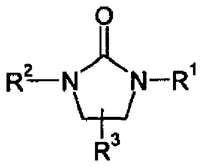 où
R¹, R² signifient, indépendamment l'un de l'autre, hydrogène, un radical alkyle comprenant 1 à 20 atomes de carbone, OR⁴, un radical nitro, un radical hydroxyalkyle comprenant 1 à 10 atomes de carbone,
R³ signifie hydrogène, un radical alkyle comprenant 1 à 20 atomes de carbone, qui peut le cas échéant être substitué, un groupe céto, un groupe aldéhyde, un groupe COOR⁴, un groupe amine ou amide ou un cycle aromatique comprenant 5 à 8 atomes de carbone
R⁴ signifie hydrogène ou un radical alkyle comprenant 1 à 4 atomes de carbone.

4. Corps moulés en POM selon les revendications 1 à 3, **caractérisés en ce qu'**on utilise comme piège de formaldéhyde D) des composés présentant la structure suivante ou leurs mélanges :

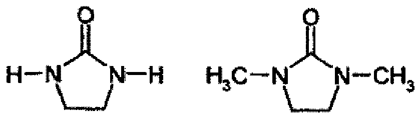

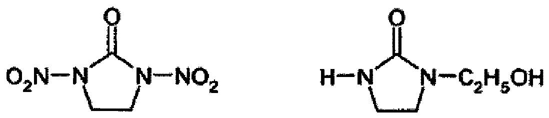

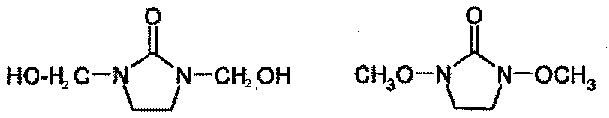

5. Corps moulés en POM selon les revendications 1 à 4, **caractérisés en ce qu'**on utilise comme liant C₃ un polymère greffé de C₁ et C₂, qui présente une structure formée par
A) 20 à 70% en poids d'un poly(oxyde d'éthylène) soluble dans l'eau et
B) 30 à 80% en poids d'un composant ester de vinyle, constitué par
B1) 70 à 100% en poids d'acétate de vinyle et/ou de propionate de vinyle et
B2) 0 à 30% en poids d'un autre monomère éthyléniquement insaturé.

6. Procédé pour la préparation de corps façonnés revêtus en POM selon les revendications 1 à 5, **caractérisé en ce qu'**on prépare au préalable, à partir des composants C) et D), une solution, une émulsion ou une dispersion et on applique ensuite celle-ci sur les corps moulés en POM et on sèche et/ou on confectionne le cas échéant.

7. Procédé selon la revendication 6, **caractérisé en ce qu'**on prépare une solution aqueuse ou acétonique de C) et D).

8. Procédé selon les revendications 6 ou 7, **caractérisé en ce qu'**on ajoute en outre jusqu'à 10% en poids d'un pigment E) à la solution de C) et D).

9. Procédé selon les revendications 6 à 8, **caractérisé en ce qu'**on applique le revêtement constitué par C) et D) au moyen d'une technique de pulvérisation (par spray).

10. Procédé selon les revendications 6 à 9, **caractérisé en ce qu'**on applique le revêtement de C) et de D) au moyen d'un mélangé des composants avec des appareils appropriées, puis on confectionne.

11. Procédé selon les revendications 6 à 10, **caractérisé en ce qu'**on applique le revêtement à température ambiante jusqu'à 60°C.

12. Masses moulées de polyoxyméthylène, pouvant être obtenues selon les conditions de procédé selon les revendications 6 à 11.
